(19) Europäisches Patentamt
European Patent Office
Office européen des brevets

(11) **EP 3 934 082 A1**

(12) **EUROPEAN PATENT APPLICATION**
published in accordance with Art. 153(4) EPC

(43) Date of publication:
**05.01.2022 Bulletin 2022/01**

(51) Int Cl.:
**H02M 3/158** (2006.01)  **B60L 7/10** (2006.01)

(21) Application number: **19917239.6**

(22) Date of filing: **30.12.2019**

(86) International application number:
**PCT/KR2019/018755**

(87) International publication number:
**WO 2020/175784 (03.09.2020 Gazette 2020/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2019 KR 20190022792**

(71) Applicant: **Hyosung Heavy Industries Corporation
Seoul 04144 (KR)**

(72) Inventor: **PARK, Jong Hyung
Uiwang-si Gyeonggi-do 16053 (KR)**

(74) Representative: **Viering, Jentschura & Partner
mbB
Patent- und Rechtsanwälte
Am Brauhaus 8
01099 Dresden (DE)**

(54) **DIRECT CURRENT CONVERTER DEVICE**

(57)  A DC-DC converter of the present invention, located between an end at a low potential and an end at a high potential with different DC potentials, for transmitting DC power from the end at the low potential to the end at the high potential or from the end at the high potential to the end at the low potential, comprising: a buck-boost circuit equipped with a buck switch and a boost switch connected in series at the end at the high potential; and a controller for adjusting periods of turning on the buck switch and the boost switch depending on transmission direction and transmission rate of DC power for a requirement; wherein, if the DC power is transmitted from the end at the low potential to the end at the high potential, the controller may turn on the boost switch for a first section and turn on the buck switch for a second section shorter than the first section during the turn-off period of the boost switch.

Fig. 1

EP 3 934 082 A1

**Description**

FIELD OF THE INVENTION

The present invention relates to a direct current to direct current (DC-DC) converter for converting power of direct power (DC) to a desired level without converting DC to alternating current (AC), and more particularly to, the DC-DC converter capable of increasing transmission efficiency and voltage regulation while transmitting the DC power bidirectionally between an end at a low potential and an end at a high potential.

BACKGROUND OF THE INVENTION

Even during a process of converting DC to DC thanks to the easiness of changing voltages by using transformers, a method of converting DC to AC, transforming voltage, and then converting to DC again has been used for a long time.
Recently, the development of power electronics components such as IGBTs and their materials, and rapid development of technology of effectively controlling multiple power components on and off by using AI are expanding the fields to which DC-DC converters for converting DC to DC are applied.
The DC-DC converters are used for energy storage systems for railways that store regenerative power of electric railway vehicles and stabilize power for overhead lines for railway vehicles in an environment of DC railway vehicles.
In case of an existing DC converter for ESS batteries for railways, if the overhead line voltage is higher than the battery voltage, and a battery is charged with the overhead line voltage, the power is transmitted to the battery from the overhead line by buck switching, and the power is transmitted to the overhead line from the battery by boost switching. Contrarily, if the overhead line voltage is lower than the battery voltage, the power is transmitted from the overhead line to the battery by boost switching, and it is transmitted from the battery to the overhead line by buck switching.
In this case, power transmission efficiency is high. However, in a unipolar switching mode as one of switching modes of DC-DC converters with high power transmission efficiency, the DC-DC converter has its the operation modes converted frequently, causing relatively drastic change in voltage of the overhead line power, and in case of a bipolar switching mode, the loss due to ripple current in the reactor increases even in a low load operation similarly to a full-load operation.

DETAILED EXPLANATION OF THE INVENTION

TECHNICAL PROBLEM

An object of the present invention is to provide a DC-DC converter capable of flexibly responding with a variety of operation modes depending on on-site conditions.
Another object of the present invention is to provide a DC-DC converter capable of increasing power transmission efficiency to reduce standby power consumption and power losses of substations while improving battery life by reducing the number of battery charge and discharge cycles.
The other object of the present invention is to provide a DC-DC converter capable of reducing its noise due to low charge and discharge current in low load operation.

MEANS OF SOLVING THE PROBLEM

A DC-DC converter, located between an end at a low potential and an end at a high potential with different direct current potentials, for transmitting power of direct current (DC) from the end at the low potential to the end at the high potential or from the end at the high potential to the end at the low potential in accordance with one aspect of the present invention may comprise: a buck-boost circuit equipped with a buck switch and a boost switch connected in series at the end at the high potential; and a controller for adjusting periods of turning on the buck switch and the boost switch depending on transmission direction and transmission rate of DC power for a requirement; wherein, if the DC power is transmitted from the end at the low potential to the end at the high potential, the controller may turn on the boost switch for a first section and turn on the buck switch for a second section shorter than the first section during the turn-off period of the boost switch.
Herein, an intermediate time point of central time points of the two consecutive first sections may be included in the second section.
Herein, the controller may operate in a boost mode for using the boost switch upon a current command, in a buck mode for using the buck switch upon a negative current command, in a mode for using either of the boost switch or the buck switch upon a unipolar command, and in a mode of using both the boost switch and the buck switch upon a partial bipolar command.

Herein, the buck switch and the boost switch may be composed of IGBT switching elements.

Herein, the buck-boost circuit may perform four interleavings in a structure of combinations of four buck switches and boost switches connected in series, which share DC links, connected in parallel.

Herein, the first section is determined in following equations:

$$x = V_B\left(1 + \frac{V_L}{V_L - V_B}\right) \qquad y = (V_L - V_B)\left(1 + \frac{V_L - V_B}{V_B}\right)$$

$$T_{on\_Bst2} = \sqrt{\frac{y}{x}T^2_{on\_BipolarBc} + T^2_{on\_Bst}}$$

where $V_L$ is terminal voltage of the end at the high potential; $V_B$ is terminal voltage of the end at the low potential; $T_{on\_BipolarBc}$ is time of the second section; $T_{on\_Bst}$ is turn-on time required for switching a boost mode upon usual unipolar switching; and $T_{on\_Bst2}$ is time of the first section.

A DC-DC converter, located between an end at a low potential and an end at a high potential with different direct current potentials, for transmitting power of DC from the end at the low potential to the end at the high potential or from the end at the high potential to the end at the low potential in accordance with another aspect of the present invention may comprise:

a buck-boost circuit equipped with a buck switch and a boost switch connected in series at the end at the high potential; and a controller for adjusting periods of turning on the buck switch and the boost switch depending on transmission direction and transmission rate of DC power for a requirement;

wherein, if the DC power is transmitted from the end at the high potential to the end at the low potential, the controller may turn on the buck switch for a first section and turns on the boost switch for a second section shorter than the first section during the turn-off period of the buck switch.

EFFECTS OF THE INVENTION

A DC-DC converter of the present invention in accordance with the aforementioned configuration has an effect of improving voltage quality by adjusting strength depending on voltage regulation.

In addition, the DC-DC converter in accordance with the present invention has an effect of increasing battery life reducing the number of battery charge and discharge cycles.

Besides, the DC-DC converter in accordance with the present invention has an effect of flexibly responding with a variety of operation modes depending on on-site conditions. For example, it is possible to develop an algorithm depending on a load pattern including performing partial bipolar switching for a voltage regulator function on low load operation or widening or narrowing a bipolar switching area, if necessary.

Furthermore, the DC-DC converter in accordance with the present invention has an effect of reducing standby power consumption due to improved power transmission efficiency and power losses of substations.

Moreover, the DC-DC converter in accordance with the present invention has an effect of reducing its noise due to low charge and discharge current on low load operation.

BRIEF DESCRIPTION OF THE DRAWINGS

Fig. 1 is a block diagram illustrating configuration of a DC-DC converter in accordance with one example embodiment of the present invention.

Fig. 2 is a circuit diagram illustrating an example embodiment of a buck-boost circuit constituting the DC-DC converter in Fig. 1.

Fig. 3 is a concept diagram illustrating an example embodiment of a block structure performing control of PWM through feedforward method and feedback one like PI.

Fig. 4 is a concept diagram illustrating another example embodiment of a block structure performing control of PWM through feedforward method and feedback one like PI.

Fig. 5 is a chart of a waveform of switching signals and inductor current upon conversion by the DC-DC converter in the example embodiment in a CCM mode.

Fig. 6 is a chart of a waveform of switching PWM signals and the current in an inductor upon conversion in a boost mode in unipolar switching.

Fig. 7 is a chart of a waveform of switching PWM signals and the current in an inductor upon conversion in modified unipolar or partial bipolar switching in accordance with the thought of the present invention.

## DETAILED DESCRIPTION OF THE PREFERRED EMBODIMENTS

Detailed example embodiments to implement the present invention will be explained below by referring to attached drawings.

Upon the explanation of the present invention, terms such as "a first," "a second," etc. may be used to explain a variety of components but the components may not be limited by such terms. The terms are used only for the purpose of distinguishing one component from another. For example, a first component may be named as a second component without being beyond the scope of the right of the present invention and similarly, even a second component may be named as a first one.

If it is mentioned that a component is connected or linked to another component, it may be understood that the component may be directly connected or linked to the another component but also a third component may exist in between them.

The terms used in this specification are used only to explain specific example embodiments and they are not intended to limit the present invention. Unless a context clearly indicates a different meaning, any reference to singular may include plural ones.

In this specification, it can be understood that terms such as include or equip are intended to indicate existence of features, numbers, steps, operations, components, parts or combinations thereof, and existence or addibility of one or more different features, numbers, steps, operations, components, parts or combinations thereof is not excluded.

Besides, for clearer explanation, shapes, sizes, etc. of elements in drawings may be exaggerated.

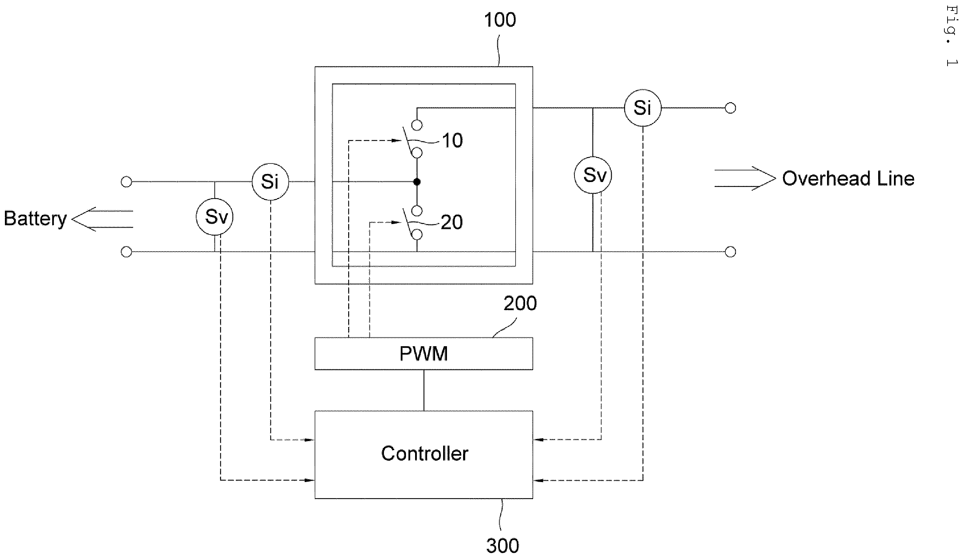

Fig. 1 is a block diagram illustrating configuration of a DC-DC converter in accordance with one example embodiment of the present invention.

The illustrated DC-DC converter, which is located between a battery connection end at a low potential and an overhead line connection end at a high potential, performs a role of supplying power charged in a battery connected to the battery connection end to an overhead line connected to the overhead line connection end, or supplying charged power from the overhead line to the battery.

The illustrated DC-DC converter comprises: a buck-boost circuit 100 equipped with a buck switch 10 and a boost switch 20 connected in series at the end as overhead line connection end at the high potential; and a controller for adjusting turn-on periods of the buck switch 10 and the boost switch 20 depending on transmission direction and transmission rate of DC power for a requirement.

Herein, if the DC power is transmitted from the battery connection end at the low potential to the overhead line connection end at the high potential, the controller performs an operation of turning on the boost switch 20 for a first section and turns on the buck switch 10 for a second section shorter than the first section during the turn-off period of the boost switch.

A node connected with the buck switch 10 and the boost switch 20 of the buck-boost circuit 100 is connected to the positive end of the battery at the low potential.

The buck switch 10 and the boost switch 20 constituting the buck-boost circuit 100 may be implemented with a semiconductor switching element, e.g., an IGBT switching element.

The buck-boost circuit 100 may operate as a kind of buck converter circuit by fixing the boost switch 20 to be off, and making the buck switch 10 switch specific frequency in PWM. If it operates as a buck converter circuit, the DC power supplied from the overhead line at the high potential becomes stepped down and supplied to the battery at the low potential. In general, such situation may occur if the battery is charged with the power left on the overhead line, and such DC converting operation mode is called a buck mode.

The buck-boost circuit 100 may operate as a kind of boost converter circuit by fixing the buck switch 10 to be off, and making the boost switch 20 switch specific frequency in PWM. If it operates as a boost converter circuit, the DC power discharged from the battery at the low potential becomes stepped up and supplied to the overhead line at the high potential. In general, such situation may occur if the power charged in the battery is supplied to the overhead line due to much load on the overhead line, and such DC converting operation mode is called a boost mode.

Because a power transmitting path itself is shut off at a section where neither the buck mode nor the boost mode is performed, less power is consumed during the process of transmitting the power, and the power transmission efficiency is high. However, a separate regulator is required to increase voltage regulation due to much ripple of the converted power by frequent change in modes, i.e., conversion between the buck mode and the boost mode.

To increase the regulation of the converted power, and the ripple noise, the buck-boost circuit 100 may alternate the buck switch 10 and the boost switch 20 in turn, and operate in a continuous-conduction-mode (CCM) for adjusting transmission voltage ratio by adjusting width of a turn-on period of each switching mode. The CCM is called a bipolar mode, and the buck mode or the boost mode is also called a unipolar mode.

In general, because there is less power in the whole system and the power is frequently increased or reduced under the situation that there is not much surplus power left in the overhead line, e.g., not much regenerative power due to quick braking or less load in the overhead line system, loss is not significant in the DC-DC converting process, and voltage regulation is rather strongly required to stabilize the whole power system.

Accordingly, under the situation that charged power is supplied from the overhead line to the battery, if a lot of power is required to be supplied to the battery, conversion may be performed in the buck mode, and if less power is required to be supplied, conversion may be performed using CCM.

Meanwhile, if there is much power that must be supplied to the overhead line under the situation that power charged from the battery is provided to the overhead line, conversion may be performed in the boost mode, and if there is less power that must be supplied to the overhead line, conversion may be performed using CCM.

Under the situation that the power charged in the battery is provided to the overhead line, or the power for the overhead line is charged, the present invention proposes that if the power transmission efficiency of the buck-boost circuit 100 is important, conversion is performed in a unipolar switching mode, and if the power transmission efficiency is less important, conversion is performed in the modified unipolar switching or partial bipolar switching mode.

Below will be explanation on the boost mode, and the buck mode works in the same way as the boost mode while the switches are different.

In the existing boost mode, the buck switch continues to be an off state. Contrarily, the boost conversion mode to which the modified unipolar switching or partial bipolar switching mode is applied performs an operation of turning on the buck switch for a specified section during the period of turning on the boost switch. At the time, the turn-on time of the buck switch, i.e., the second section, is shorter than the turn-on time of the boost switch, i.e., the first section. Accordingly, the boost mode takes precedence over the whole operation, and it has the same power transmission direction as the existing boost mode.

Meanwhile, the turn-on time of the buck switch, i.e., the second section, is shorter than the turn-on time of the boost switch, i.e., the first section. Accordingly, the boost mode takes precedence over the whole operation, and it has the same power transmission direction as the existing boost mode.

As there clearly exists a period when both buck switch and boost switch are off between the turn-on time of the buck switch 10, i.e., the second section, and the turn-on time of the boost switch 20, i.e., the first section, there is an apparent difference from the existing CCM.

In addition, an intermediate time point of central time points of the two consecutive turn-on periods of the boost switch 20, i.e., first sections, may be included in the turn-on period of the buck switch 100, i.e., the second section. In other words, the turn-on period of the buck switch 10, i.e., the second section, may be located in the center of two consecutive turn-on periods of the boost switch 20, i.e., the first sections.

As illustrated, the controller may be composed of a PWM circuit 200 for switching a buck switch and/or a boost switch using PWM to a specific frequency level, and a control circuit 300 for adjusting a DC switching operation mode and power transmission ratio.

The PWM circuit 200 creates a PWM signal for the buck switch 10 in the buck mode, a PWM signal for the boost switch 20 in the boost mode, and a PWM signal for the buck switch 10 and the boost switch 20 in the boost conversion mode to which the modified unipolar switching or partial bipolar switching mode in accordance with the thought of the present invention is applied. In accordance with the embodiment, the PWM circuit may create a switching signal for the buck switch 10 and the boost switch 20 even using CCM.

The control circuit 300 may operate the PWM circuit 200 in the boost mode for converting the boost switch 20 under a positive current command from an external apparatus such as PCS or control server, not illustrated, and in the buck mode for converting the buck switch 10 under a negative current command. At the time, it may operate the PWM circuit 200 in a mode of converting either the boost switch 20 and the buck switch 10 under the unipolar command, and the mode for converting both the boost switch 20 and the buck switch 10 under the partial bipolar command.

The unipolar command and the partial bipolar command may be issued by the external apparatus such as PCS or control server or be determined by the control circuit 300 from a result of monitoring the battery connection end and the overhead line connection end.

Meanwhile, in accordance with another embodiment which highly tends to operate independently, the positive current command and the negative current command may be determined by the control circuit 300 as a result of monitoring the battery connection end and the overhead line connection end without being instructed from the external apparatus such as PCS or control server. In this case, if the voltage of the overhead line connection end falls below prescribed reference low potential, the control circuit 300 may determine a positive current command, and if it rises not less than prescribed reference high potential, it may determine a negative current command.

To monitor the electrical situations of the battery connection end and the overhead line connection end, the control circuit 300 as illustrated may receive a sensing signal from a voltage sensor Sv and a current sensor Si installed at the battery connection end and a sensing signal from a voltage sensor Sv and a current sensor Si installed at the overhead line connection end.

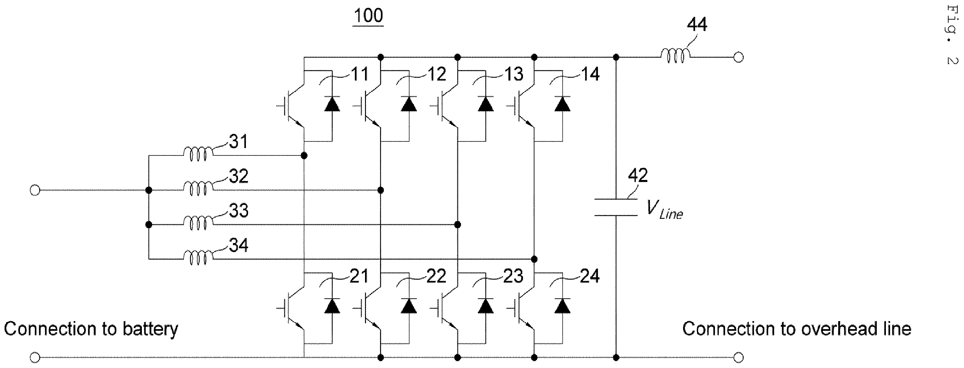

Fig. 2 is a circuit diagram illustrating an example embodiment of a buck-boost circuit constituting the DC-DC converter in Fig. 1.

The illustrated buck-boost circuit performs four interleavings in a structure of combinations of four buck switches and boost switches connected in series, which share DC links, connected in parallel.

One inductor 44 at the output end is equipped in the illustrated circuit, and each of inductors 31-34 to individual input ends is equipped for each interleaving at the battery connection end.

The DC-DC converter in accordance with Figs. 1 and 2 may increase efficiency by using DCM upon full load operation with relatively small reactor design values compared to a bipolar switching technique, and may increase approximately more than 98%. In addition, upon setting bipolar switching, design flexibility enough to design CCM operation upon light load operation is excellent.

In accordance with the embodiment, the control circuit 300 in Fig. 1 may have feedforward method-based, feedback method-based, and PI-based control structures.

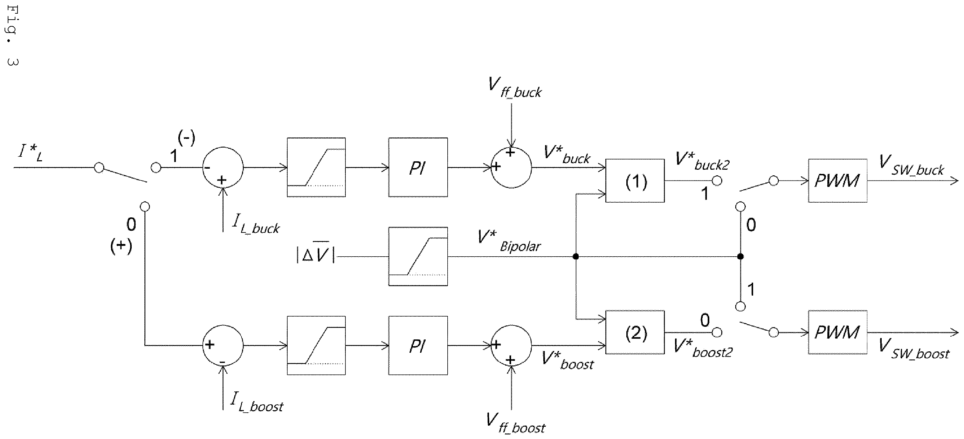

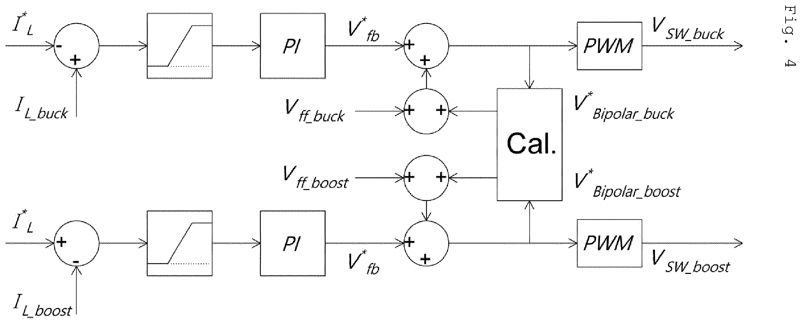

The block structure of performing the aforementioned PWM control using feedforward, feedback and PI may be expressed as shown in Figs. 3 or 4.

As shown above, if the DC power is transmitted from the end at the low potential to the end at the high potential, i.e., if it operates in a boost mode for converting the boost switch under the positive current command, the controller in the present example embodiment under the bipolar mode command turns on the boost switch for a first section, and turns on the buck switch for a second section shorter than the first section during the turn-off section of the boost switch.

At this time, explanation on the optimal length of the first section as the turn-on period of the boost switch and the second section as the turn-on period of the buck switch will be made in details.

First, upon switching only the buck switch in a usual buck mode, $S_{Bc}$ as the area proportional to transmission power according to the switching may be calculated in accordance with the following equations 1-1 and 1-2:

[Equation 1-1]

$$S_{Bc} = i_{Bc}(T_{on\_Bc} + T_{off\_Bc})$$

[Equation 1-2]

$$S_{Bc} = \frac{V_L - V_B}{L} T_{on\_Bc}^2 \left(1 + \frac{V_L - V_B}{V_B}\right)$$

where $i_{Bc}$ is a current in each inductor (31-34 in Fig. 2) in the buck mode; $T_{on\_Bc}$ is the turn-on time of the buck switch; $T_{off\_Bc}$ is the turn-off time of the buck switch as the time of the current flowing in a diode; $V_L$ is terminal voltage of the overhead line or power line (as VLine in Fig. 2); $V_B$ is terminal voltage of the battery; and L is an inductance of each inductor (31-34 in Fig. 2).

Herein, the battery terminal is an end at a low potential, and the terminal of the overhead line or power line is an end at a high potential.

Next, upon switching only the boost switch in a usual boost mode, $S_{Bst}$ or shortly Si as the area proportional to transmission power according to the switching and $S_2$ as the area upon performing a modified unipolar switching or partial bipolar switching mode in accordance with the thought of the present invention may be calculated in accordance with the following equations 2-1 and 2-2:

[Equation 2-1]

$$S_{Bst} = S_1 = i_{st}(T_{on\_Bst} + T_{off\_Bst})$$

[Equation 2-2]

$$S_{Bst} = \frac{1}{L} V_B T_{on\_Bst}^2 \left( 1 + \frac{V_B}{V_L - V_B} \right)$$

$$S_{Bst2} = \frac{1}{L} V_B T_{on\_Bst2}^2 \left( 1 + \frac{V_B}{V_L - V_B} \right)$$

where $i_{st}$ is a current in each inductor (31-34 in Fig. 2) in the boost mode; $T_{on\_Bst}$ and $T_{on\_Bst2}$ are the turn-on time of the boost switch; and $T_{off\_Bst}$ is the turn-off time of the boost switch as the time of the current flowing in a diode. Meanwhile, $V_L$, $V_B$, and L are same as explained in Equations 1-1 and 1-2.

Upon the DC power transmitted to an end at a high potential as overhead line or power line from an end at a low potential as battery where the boost mode operation is required, the sub-buck mode switching added for the main boost mode switching in accordance with the thought of the present invention may be performed. In other words, if modified unipolar switching or partial bipolar switching is performed, equations for the main boost mode switching time and the sub-buck mode switching time are as follows:

[Equation 3-1]

$$S_{Bst2} - S_{Bst} = S_{Bipolar\_Bc}$$

[Equation 3-2]

$$x = V_B \left( 1 + \frac{V_L}{V_L - V_B} \right) \qquad y = (V_L - V_B) \left( 1 + \frac{V_L - V_B}{V_B} \right)$$

[Equation 3-3]

$$T_{on\_Bst2} = \sqrt{\frac{y}{x} T_{on\_BipolarBc}^2 + T_{on\_Bst}^2}$$

where $S_{Bc}$ is an area for sub-buck mode switching upon performance of modified unipolar switching or partial bipolar switching; $T_{on\_BipolarBc}$ is the turn-on time of sub-buck mode switching; and $T_{on\_Bst}$ is the turn-on time of boost mode switching upon performance of usual unipolar switching. Meanwhile, $V_L$, $V_B$, and L are same as explained in Equations 1-1 and 1-2.

$T_{on\_Bst2}$ finally calculated from the Equation 3-3 is a turn-on time for switching the main boost mode upon performing the modified unipolar switching or partial bipolar switching.

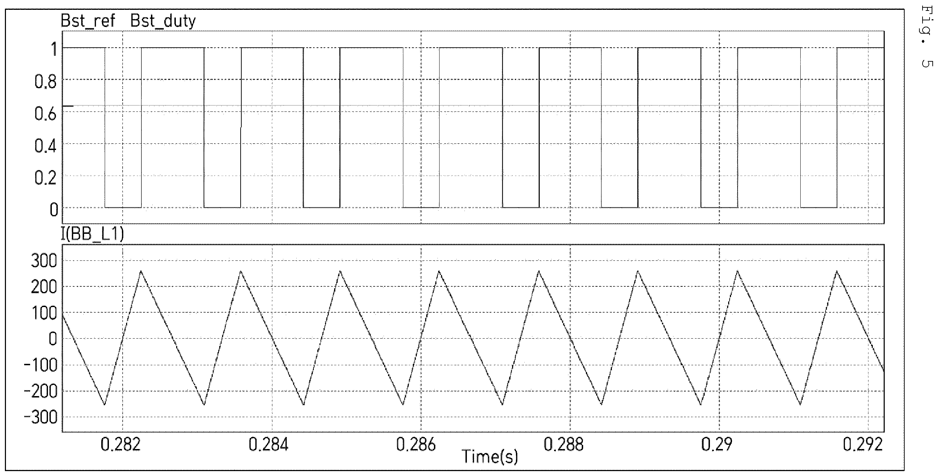

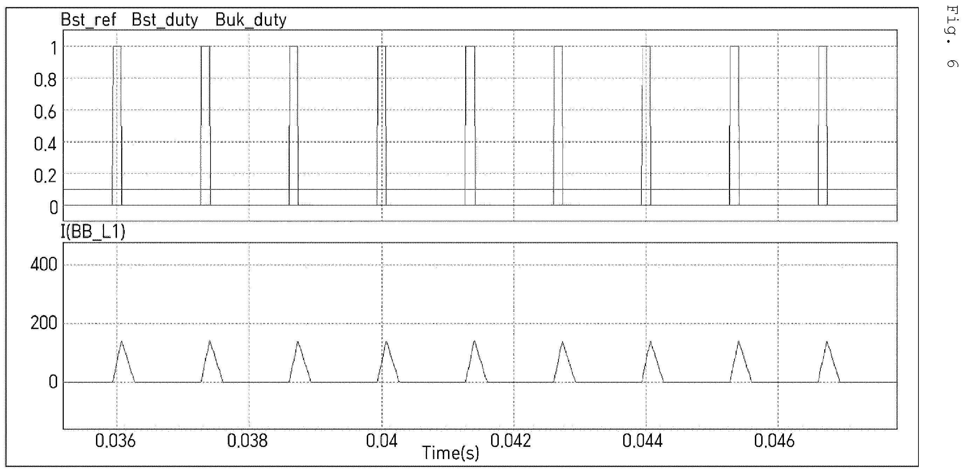

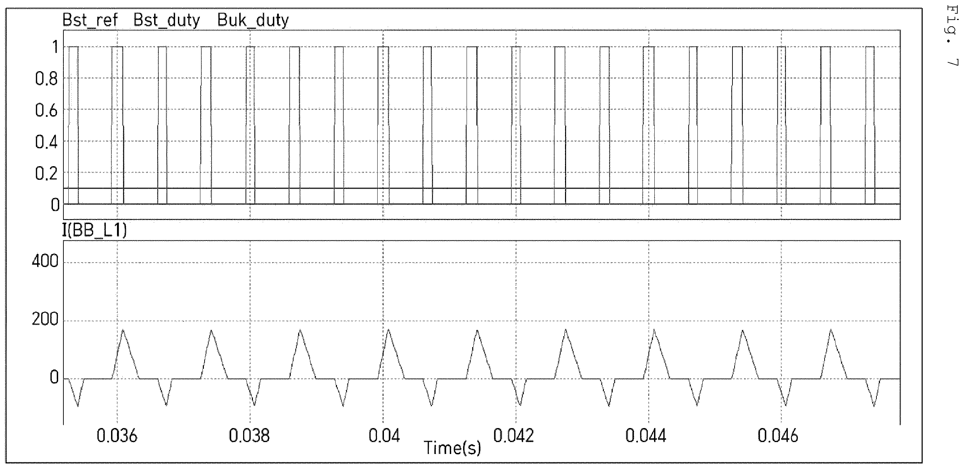

Fig. 5 illustrates switching a signal as a gate-applied signal of an IGBT switch and the current in an inductor upon conversion by the DC-DC converter in the example embodiment in a CCM mode, and Fig. 6 illustrates switching PWM signals and the current in an inductor upon conversion in a boost mode in unipolar switching. Fig. 7 illustrates switching PWM signals and the current in an inductor upon conversion in modified unipolar or partial bipolar switching in accordance with the thought of the present invention.

In Fig. 7, the turn-on time, i.e., the second section, of the buck switch could be found to be slightly shorter than the turn-on time, i.e., the first section, of the boost switch. The turn-on time of the boost switch in Fig. 7 is longer than that of the boost switch in Fig. 6. In Fig. 7, due to the turn-on time of the buck switch, the current in an inverter flows in the reverse direction. To set this off, a longer turn-on time of the boost switch needs to be given than the turn-on time of the boost switch in Fig. 6, and this may achieve the same power transmission rates as that as shown in Fig. 6.

In Fig. 7, even the current flowing alternatively in the reverse direction causes slight loss, but it increases the voltage regulation of the converting power, and the frequent conversion of the converting modes is controlled.

In accordance with the present example embodiment, optical values upon conversion of the boost mode and the buck mode constituting the usual unipolar mode to the modified unipolar switching or partial bipolar switching mode are as shown below.

First, $S_{Bc}$, an area proportional to the transmission power upon conversion of the buck switch only to the usual buck mode, may be calculated in accordance with Equations 4-1 and 4-2 as shown below.

[Equation 4-1]

$$S_{Bc} = i_{Bc}(T_{on\_Bc} + T_{off\_Bc})$$

[Equation 4-2]

$$S_{Bc} = \frac{V_L - V_B}{L} T_{on\_Bc}\left(T_{on\_Bc} + T_{on\_Bc}\frac{V_L - V_B}{V_B}\right) = \frac{V_L - V_B}{L} T_{on\_Bc}^2\left(1 + \frac{V_L - V_B}{V_B}\right)$$

where $i_{Bc}$ is a current in each inductor (31-34 in Fig. 2) in the buck mode; $T_{on\_Bc}$ is the turn-on time of the buck switch and $T_{off\_Bc}$ is the turn-off time of the buck switch; $V_L$ is the terminal voltage of an overhead line or power line or $V_{Line}$ in Fig. 2; $V_B$ is the terminal voltage of the battery; and L is the inductance of each of inductors (31-34 in Fig. 2).

Herein, the battery terminal is an end at a low potential, and the terminal of the overhead line or power line is an end at a high potential.

Next, $S_{Bst}$ or shortly Si, an area proportional to transmission power upon conversion of the boost switch only to the usual boost mode, and $S_2$, an area upon performing modified unipolar switching or partial bipolar switching, in accordance with the thought of the present invention may be calculated under Equations 5-1 and 5-2 as shown below.

[Equation 5-1]

$$S_{Bst} = S_1 = i_{st}(T_{on\_Bst} + T_{off\_Bst})$$

[Equation 5-2]

$$S_{Bst} = \frac{V_B}{L} T_{on\_Bst}\left(T_{on\_Bst} + T_{on\_Bst}\frac{V_B}{V_L - V_B}\right) = \frac{V_B}{L} T_{on\_Bst}^2\left(1 + \frac{V_B}{V_L - V_B}\right)$$

where $i_{st}$ is a current in each inductor (31-34 in Fig. 2) in the buck mode; $T_{on\_Bst}$ is the turn-on time of the boost switch; and $T_{off\_Bst}$ is the turn-off time of the boost switch. Meanwhile, $V_L$, $V_B$, and L are same as explained in Equations 4-1 and 4-2.

The calculation of the additional command upon performing modified unipolar switching or partial bipolar switching is as shown in the equations as seen below.

[Equation 6-1]

$$X = V_B \left( 1 + \frac{V_L}{V_L - V_B} \right) \qquad y = \left( V_L - V_B \right) \left( 1 + \frac{V_L - V_B}{V_B} \right)$$

[Equation 6-2]

$$S_{Bst2} = S_{Bipolar\_Bc} + S_{Bst}$$

[Equation 6-3]

$$V^*_{Bst\_2} = \sqrt{\frac{y}{X} V^2_{Bipolar} + V^2_{Bst}}$$

The equations 6-2 and 6-3 propose the maximum voltage ($V^*_{Bst\_2}$) of the boost mode as an optimal voltage when a sub-buck mode switching added to switching the main boot mode is performed by replacing the boost mode for converting the boost switch under the positive current command, in other words, when the DC power from the end at the low potential to the end is supplied at the high potential.

Herein, $S_{Bipolar\_Bc}$ is an area proportional to the transmission power due to the sub-buck switching upon performing the modified unipolar switching or partial bipolar switching, and $V_{Bipolar}$ is the maximum voltage upon the sub-buck switching while $V_{Bst}$ is the maximum voltage upon the main boost switching.

[Equation 6-4]

$$S_{Bc2} = S_{Bipolar\_Bst} + S_{Bc}$$

[Equation 6-5]

$$V^*_{Bc\_2} = \sqrt{\frac{X}{y} V^2_{Bipolar} + V^2_{Bc}}$$

Meanwhile, the equations 6-4 and 6-5 propose the maximum voltage ($V^*_{Bc\_2}$) of the buck mode as an optimal voltage when a sub-boost mode switching added to switching the main buck mode is performed by replacing the buck mode for converting the buck switch under the negative current command, in other words, when the DC power from the end as overhead line or power line at the low potential to the end as battery is supplied at the high potential.

Herein, $S_{Bipolar\_Bst}$ is an area proportional to the transmission power due to the sub-boost switching upon performing the modified unipolar switching or partial bipolar switching, and $V_{Bipolar}$ is the maximum voltage upon the sub-boost switching while $V_{Bc}$ is the maximum voltage upon the main buck switching.

It must be noted that the aforementioned example embodiment is for explanation, not for limitation. Besides, it will be understood by those skilled in the art to which the present invention pertains that a variety of example embodiments are possible within the scope of technical thoughts of the present invention.

* Reference Numbers

[0080]

10:    Buck switch
20:    Boost switch
100:    Buck-boost circuit
200:    PWM circuit
300:    Control circuit

Industrial Availability

The present invention relates to a DC-DC converter for converting DC power to a desired level without converting DC to AC, and is available in the converter field.

**Claims**

1. A DC-DC converter, located between an end at a low potential and an end at a high potential with different direct current potentials, for transmitting power of direct current (DC) from the end at the low potential to the end at the high potential or from the end at the high potential to the end at the low potential, comprising:

   a buck-boost circuit equipped with a buck switch and a boost switch connected in series at the end at the high potential; and
   a controller for adjusting periods of turning on the buck switch and the boost switch depending on transmission direction and transmission rate of DC power for a requirement;
   wherein, if the DC power is transmitted from the end at the low potential to the end at the high potential, the controller turns on the boost switch for a first section and turns on the buck switch for a second section shorter than the first section during the turn-off period of the boost switch.

2. The controller of Claim 1, wherein an intermediate time point of central time points of the two consecutive first sections is included in the second section.

3. The controller of Claim 1, wherein the controller operates in a boost mode for using the boost switch upon a current command, in a buck mode for using the buck switch upon a negative current command, in a mode for using either of the boost switch or the buck switch upon a unipolar command, and in a mode of using both the boost switch and the buck switch upon a partial bipolar command.

4. The controller of Claim 1, wherein the buck switch and the boost switch are composed of IGBT switching elements.

5. The controller of Claim 1, wherein the buck-boost circuit performs four interleavings in a structure of combinations of four buck switches and boost switches connected in series, which share DC links, connected in parallel.

6. The controller of Claim 1, wherein the first section is determined in following equations:

$$x = V_B \left( 1 + \frac{V_L}{V_L - V_B} \right) \qquad y = (V_L - V_B) \left( 1 + \frac{V_L - V_B}{V_B} \right)$$

$$T_{on\_Bst2} = \sqrt{\frac{y}{x} T^2_{on\_BipolarBc} + T^2_{on\_Bst}}$$

wherein $V_L$ is terminal voltage of the end at the high potential; $V_B$ is terminal voltage of the end at the low potential; $T_{on\_BipolarBc}$ is time of the second section; $T_{on\_Bst}$ is turn-on time required for switching a boost mode upon usual unipolar switching; and $T_{on\_Bst2}$ is time of the first section.

7.  A DC-DC converter, located between an end at a low potential and an end at a high potential with different direct current potentials, for transmitting power of DC from the end at the low potential to the end at the high potential or from the end at the high potential to the end at the low potential, comprising:

    a buck-boost circuit equipped with a buck switch and a boost switch connected in series at the end at the high potential; and
    a controller for adjusting periods of turning on the buck switch and the boost switch depending on transmission direction and transmission rate of DC power for a requirement;
    wherein, if the DC power is transmitted from the end at the high potential to the end at the low potential, the controller turns on the buck switch for a first section and turns on the boost switch for a second section shorter than the first section during the turn-off period of the buck switch.

Fig. 1

Fig. 2

Fig. 3

Fig. 4

Fig. 5

Fig. 6

Fig. 7

## INTERNATIONAL SEARCH REPORT

| International application No. |
| --- |
| **PCT/KR2019/018755** |

**A. CLASSIFICATION OF SUBJECT MATTER**

*H02M 3/158(2006.01)i, B60L 7/10(2006.01)i*

According to International Patent Classification (IPC) or to both national classification and IPC

**B. FIELDS SEARCHED**

Minimum documentation searched (classification system followed by classification symbols)
H02M 3/158; F24F 1/00; G05F 1/10; H02M 3/07; H02M 3/155; H02S 40/32; B60L 7/10

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: DC converter, buck-boost, switch, turn-on, time, CCM(continuous conduction mode)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-0997377 B1 (FOUNDATION FOR RESEARCH AND BUSINESS, SEOUL NATIONAL UNIVERSITY OF SCIENCE AND TECHNOLOGY) 30 November 2010 See paragraphs [0007], [0027]-[0064], [0090]; and figures 3-10. | 7 |
| Y | | 1-5 |
| A | | 6 |
| Y | KR 10-2015-0025486 A (FOUNDATION FOR RESEARCH AND BUSINESS, SEOUL NATIONAL UNIVERSITY OF SCIENCE AND TECHNOLOGY) 10 March 2015 See paragraphs [0058]-[0067]; and figure 7. | 1-5 |
| Y | KR 10-1766433 B1 (G2POWER CO., LTD.) 08 August 2017 See paragraphs [0057]-[0098]; claim 1; and figures 2, 5. | 3 |
| A | US 2011-0199062 A1 (SINGNURKAR, Pramod) 18 August 2011 See paragraphs [0065]-[0099]; and figures 3A-5B. | 1-7 |
| A | KR 10-2017-0001139 A (LG ELECTRONICS INC. et al.) 04 January 2017 See paragraphs [0030]-[0083]; and figures 2-4. | 1-7 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 APRIL 2020 (10.04.2020) | **10 APRIL 2020 (10.04.2020)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2019/018755**

| Patent document cited in search report | Publication date | Patent family member | Publication date |
|---|---|---|---|
| KR 10-0997377 B1 | 30/11/2010 | None | |
| KR 10-2015-0025486 A | 10/03/2015 | KR 10-1523045 B1 | 27/05/2015 |
| KR 10-1766433 B1 | 08/08/2017 | None | |
| US 2011-0199062 A1 | 18/08/2011 | AT 501545 T | 15/03/2011 |
| | | CN 101828327 A | 08/09/2010 |
| | | CN 101828327 B | 01/05/2013 |
| | | EP 2028752 A1 | 25/02/2009 |
| | | EP 2028752 B1 | 09/03/2011 |
| | | US 9035638 B2 | 19/05/2015 |
| | | WO 2009-024584 A2 | 26/02/2009 |
| | | WO 2009-024584 A3 | 08/10/2009 |
| KR 10-2017-0001139 A | 04/01/2017 | KR 10-1759907 B1 | 20/07/2017 |

Form PCT/ISA/210 (patent family annex) (January 2015)